# EUROPÄISCHE PATENTANMELDUNG

(11) **EP 1 287 967 A1**
(43) Veröffentlichungstag der Anmeldung: **05.03.2003**
(21) Anmeldenummer: 02013770.9
(22) Anmeldetag: 21.06.2002
(51) Int. Cl.: B29C 45/67

(54) **Verriegelung für eine Säule**

(30) Priorität: 03.09.2001 DE 20114535 U
(71) Anmelder: Battenfeld GmbH, D-58540 Meinerzhagen (DE)
(72) Erfinder: Füller, Klaus, Dipl.-Ing., 19061 Schwerin (DE); Elsner, Lothar, 19075 Pampow (DE)

(57) **Zusammenfassung**

Die Erfindung betrifft eine Verriegelung für eine Säule (1), die aufweist, einen Kolben (2) mit einer Kolbenstange (3), wobei die Kolbenstange (3) in einer Buchse (4) angeordnet ist, wobei die Buchse (4) und der Kolben (2) in einer ein- oder mehrteiligen Platte (5, 6) angeordnet sind, wobei der Kolben (2) und die Buchse (4) in der ein- oder mehrteiligen Platte (5, 6) bewegbar ist.

Erfindungsgemäß ist eine Buchse (4) vorgesehen, die mindestens eine Stufe (7, 8) aufweist, um die Krafteinleitung zu verteilen, wobei die Kontur der Stufen (7, 8) zum Ende einer einsetzbaren Säule (1) korrespondieren, und wobei die Buchse (4) ein Gewinde (9) aufweist, dass den Gewindezapfen (10) der Kolbenstange (3) aufnimmt.

## Beschreibung

Die Erfindung betrifft eine Verriegelung für eine Säule, die aufweist,
einen Kolben mit einer Kolbenstange,
wobei die Kolbenstange in einer Buchse angeordnet ist,
wobei die Buchse und der Kolben in einer ein- oder mehrteiligen Platte angeordnet sind,
wobei der Kolben und die Buchse in der ein- oder mehrteiligen Platte bewegbar ist.

Verriegelungen der gattungsgemäßen Art sind bekannt und werden insbesondere in Zweiplattenspritzgießmaschinen eingesetzt. So beschreibt die **DD 274 590** zum Beispiel eine Verriegelung, die darauf abstellt, dass die Mittelsenkrechten der jeweiligen Berührungsflächen von Buchse und Kolben bzw. eingesetzter Stange sich in einem gemeinsamen Punkt schneiden. Mit der Problematik, eine Stange oder Säule einer Zweiplattenspritzgießmaschine mit einer zweiten Platte elastisch, aber fest verbinden zu können beschäftigt sich auch die **US 3,465,383**. Die freitragenden Säulen werden in je ein Festlager und einem zweiten in einer Hülse angeordneten Lager geführt. Dieses zweite Lager ist durch die geometrische Form der Hülse begrenzt elastisch. Um die durch diese elastische Lagerung und die Massen der freitragenden Säulenenden entstehenden Lageabweichungen der Säulenenden von ihren Längsachsen beim Eintauchen in die Hochdruckschließzylinder ausgleichen zu können, sind diese sehr kompliziert aufgebaut. Die Verriegelungsbacken sind innerhalb der Druckflüssigkeitsdose so beweglich in der Hydraulikflüssigkeit gelagert, dass erhebliche Abweichungen der Säulen von ihren Längsachsen ausgeglichen werden können und so auch die beim Schließkraftaufbau erforderliche Bewegungsfreiheit der Verriegelungsbacken gewährleistet wird, die durch die Plattendurchbiegung notwendig ist. Diese vielteilige Zylinderkonstruktion ist jedoch sehr herstellungsaufwendig und stellt einen komplizierten Mechanismus aus vielen Einzelteilen dar und ist somit störanfällig.
Nachteilig bei den vorgeschlagenen Lösungen ist es, dass die Stange in einer aufwendigen Lagerung gehalten wird und die Übertragung der Kräfte über einen Punkt in die Stange erfolgt.

**Aufgabe** der Erfindung ist es, eine Lösung anzubieten, bei der die Kräfte verteilt eingeleitet werden, ohne dass dies erheblich zu Lasten der Elastizität im Lager führt.

Die **Lösung** der Aufgabe durch die Erfindung ist gekennzeichnet durch eine mindestens zwei Stufen (7, 8) aufweisende Buchse (4), um die Krafteinleitung zu verteilen, wobei die Kontur der Stufen (7, 8) zum Ende einer einsetzbaren Säule (1) korrespondiert und die Buchse (4) ein Gewinde (9) aufweist, dass den Gewindezapfen (10) der Kolbenstange (3) aufnimmt. Durch diese Ausgestaltung wird erreicht, dass die auftretenden Kräfte auf unterschiedliche Ebenen übertragen werden. Dies gilt sowohl für die Übertragung auf die Säule (1) als auch für den Kolben (2), aber auch für die Krafteinleitung in die Buchse (4).

Vorteilhafterweise sind zwei unterschiedliche Stufen (7, 8) in der Buchse (6) ausgeführt. Durch die unterschiedlichen mittleren Radien wird sichergestellt, dass der Kraftfluß, der auf die erste Stufe wirkt, an einer anderen Umfangslinie als der Kraftfluß, der auf die zweite Stufe wirkt, in die Säule (1) eingeleitet wird. Um den Kraftfluß im Kolben bzw. über den Kolben in die Buche an einer anderen Stelle einzuleiten, kann vorgesehen werden, den Durchmesser des Gewindezapfens unterschiedlich zum Durchmesser der Stufen zu wählen.

Die Querschnittsform der Säule spielt dabei keine Rolle, jeder sinnvoll und damit wirtschaftlich zu fertigende Querschnitt kann eingesetzt werden. Sicherlich ist ein runder Querschnitt allen anderen vorzuziehen, aber auch ein rechteckiger, achteckiger oder beispielsweise ein Polygon ist einsetzbar.

Die vorgeschlagene Lösung ist besonders geeignet, eine Schließeinheit einer Zweiplattenspritzgießmaschine zur Verarbeitung von plastifiziertem Kunststoffmaterial zu verriegeln.

In den Zeichnungen ist ein Ausführungsbeispiel der aufgabengemäßen Lösung dargestellt.
- Fig. 1: zeigt einen Halbschnitt durch die Verriegelung, mit einer Stufe und in
- Fig. 2: ist eine Verriegelung nach Figur 1 mit zwei Stufen zu sehen.

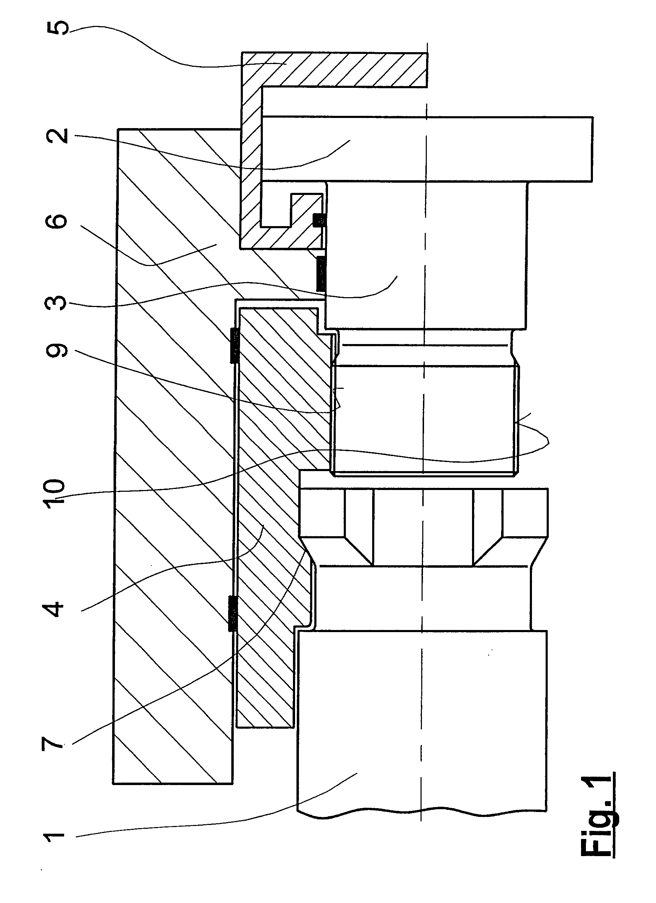

Figur 1 zeigt einen Halbschnitt durch die Verriegelung, es ist nur die obere Hälfte der Buchse 4 und der mehrteiligen Platte 5, 6 dargestellt. Es wird die Verriegelung für eine Säule 1 mit dem in einer zweiteiligen Platte 5, 6 eingesetzten Kolben 2 mit Kolbenstange 3 gezeigt. Die Kolbenstange 3 steht in Wirkverbindung mit der Buchse 4. Die Buchse 4 und der Kolben 2, 3 ist in der Platte 5, 6 beweglich gelagert. Die Buchse 4 weist eine Stufe 7 auf, die zur Stufe in der Säule 1 korrespondiert.

Die Buchse 4 ist weiterhin mit einem Gewinde 9 versehen, das den Gewindezapfen 10 der Kolbenstange 3 aufnimmt. Um die Krafteinleitung möglichst gut zu verteilen, ist der Durchmesser des Gewindezapfens 10 kleiner gewählt als der Durchmesser der Stufe 7.

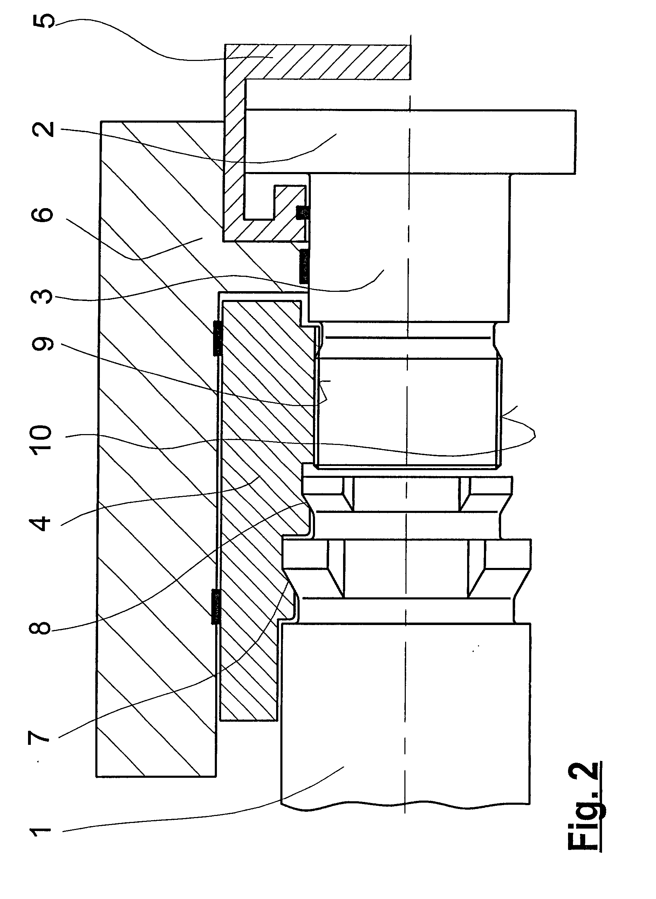

Eine zweistufige Lösung ist beispielhaft in Figur 2 dargestellt.

### Bezugszeichenliste:

- 1: Säule
- 2: Kolben
- 3: Kolbenstange
- 4: Buchse
- 5: Teil einer Platte
- 6: Teil einer Platte
- 7: erste Stufe in Buchse 4
- 8: zweite Stufe in Buchse 4
- 9: Gewinde in Buchse 4
- 10: Gewindezapfen an Kolbenstange 3

## Patentansprüche

1. Verriegelung für eine Säule (1), die aufweist,
einen Kolben (2) mit einer Kolbenstange (3),
wobei die Kolbenstange (3) in einer Buchse (4) angeordnet ist,
wobei die Buchse (4) und der Kolben (2) in einer ein- oder mehrteiligen Platte (5, 6) angeordnet sind,
wobei der Kolben (2) und die Buchse (4) in der ein- oder mehrteiligen Platte (5, 6) bewegbar ist
**gekennzeichnet durch**,
eine Buchse (4), die mindestens eine Stufe (7, 8) aufweist, um die Krafteinleitung zu verteilen,
wobei die Kontur der Stufen (7, 8) zum Ende einer einsetzbaren Säule (1) korrespondieren, und
wobei die Buchse (4) ein Gewinde (9) aufweist, dass den Gewindezapfen (10) der Kolbenstange (3) aufnimmt.

2. Verriegelung nach Anspruch 1, **dadurch gekennzeichnet, dass** die Buchse mit 2 Stufen ausgeführt ist, die zu zwei Stufen der Säule (1) korrespondieren.

3. Verriegelung nach Anspruch 2, **dadurch gekennzeichnet, dass** die zwei Stufen (7, 8) unterschiedlich ausgeführt sind.

4. Zweiplattenspritzgießmaschine zur Verarbeitung von vorzugsweise plastifiziertem Kunststoff, **dadurch gekennzeichnet, dass** die Schließeinheit der Maschine mit einer Verriegelung nach einem der Ansprüche 1 bis 3 ausgeführt ist.
